# EUROPEAN PATENT APPLICATION

(11) **EP 1 990 978 A1**
(43) Date of publication of application: **12.11.2008**
(21) Application number: 08155926.2
(22) Date of filing: 08.05.2008
(51) Int. Cl.: H04L 29/08, H04L 29/06, G06F 21/00

(54) **Sharing the common session between two applications on the same server**

(30) Priority: 10.05.2007 US 917237 P
(71) Applicant: Research In Motion Limited, Waterloo, Ontario N2L 3W8 (CA)
(72) Inventor: Madej, Piotr, Waterloo Ontario N2L 3W8 (CA)
(74) Representative: Rees, Alexander Ellison

(57) **Abstract**

A method of automatically sharing session data between two or more applications executing on a common server. Each application has a respective session. A copy of all session data of a first application' s session is stored in a servlet context resident on the server. The stored session data is copied to a second application's session. Thereafter, the stored session data is deleted.

## Description

### CROSS-REFERENCE TO RELATED APPLICATIONS

This application claims priority to U.S. Provisional Application No. 60/917,237, filed May 10, 2007.

### TECHNICAL FIELD

The present application relates to web services accessible by users via a network, and in particular to sharing the common session between two applications on the same server.

### BACKGROUND OF THE INVENTION

The use of Web services to deliver information content to users, via a network such as an intranet or the Internet, is well known. Typically, a web service will be deployed on a server which can be accessed via the network. The server may be composed of a single computer, or a cluster of two or more computers connected together (for example via a Local Area Network) into a single operating domain, as is well known in the art.

In many cases, it is convenient to configure a web service as a set of two or more applications, each of which provides a respective portion of the functionality of the web service. For example, a first application may be provided to handle user login, authentication, and rights management. A second application may provide a search window to enable the user to find information accessible through the web service, while a third application handles encoding and transmission of user-selected data to the user in accordance with the user's authorizations and preferences.

Preferably, the division of functionality between each of the applications forming the web service is transparent to the subscriber. This requires that information must be shared between the respective sessions of each of the involved applications.

For at least the purposes of the present application, a "session" is a logical entity that encompasses a user's interactions with an application. Each user of an application has a respective unique session. If a user accesses more than one application, then each application will instantiate a respective session encompassing the user's interactions with that application. Typically, each session is associated with a data object used to store information relevant to the session. Representative information that may be stored in such a session data object includes: user ID information; user access permissions; and state variables indicating the state of the application, which may include information identifying open web pages of the application, for example. This arrangement facilitates multi-user access to applications executing on a server, allowing each user to store and retrieve data when accessing different web pages of each application.

As is well known in the art, web servers typically prohibit sharing of session data between two or more web applications. This is done primarily due to security concerns. However, in some cases this can interfere with the users' experience of the applications they are accessing. One situation in which this occurs is a web service configured to facilitate installation of applications and application updates on a user's wireless terminal, wherein a main provisioning application handles user login and authentication and an Over The Air Software Loading (OTASL) application handles transmission and installation of software updates to the user's wireless terminal. From the user's perspective, both applications should look and feel as a single application. This means that the OTASL application needs to use the authentication and role management provided by the main Provisioning application. In order to do that, session data of the Provisioning application needs to be shared with the OTASL application.

Methods and techniques that overcome at least some the of above difficulties remain highly desirable.

### SUMMARY

One aspect of the present application provides a method of automatically sharing session data between two or more applications executing on a common server. Each application has a respective session. The method comprises: storing a copy of all session data of a first application's session in a servlet context resident on the server; copying the stored session data to a second application's session on the server; and thereafter deleting the stored session data.

The storing a copy of session data of the first application's session may include selecting a unique key in respect of the first application's session, and storing the session data in an entry of the servlet context, associated with the selected key. The unique key may correspond with a session key of the first application session and the session key may be included in a link used to access the second application from the first application.

Another aspect of the present application provides a server comprising a processor for controlling operation of the server; a first input device coupled to the processor for accepting an input; a communications subsystem coupled to the processor for communicating with a communications network; a memory coupled to the processor; and a storage device coupled to the processor. The server includes a software module resident in the memory for execution by the processor, the software module for automatically sharing session data between two or more applications executing on the server. Each application has a respective session. The software module is configured to: store a copy of all session data of a first application's session in a servlet context resident on the server, copy the stored session data to a second application's session on the server, and thereafter delete the stored session data.

### BRIEF DESCRIPTION OF THE DRAWINGS

Further features and advantages of the present invention will become apparent from the following detailed description, taken in combination with the appended drawings, in which:

FIG. 1 is a block diagram schematically illustrating a network system; and

FIG. 2 is a flow diagram schematically illustrating principle steps in a representative embodiment.

It will be noted that throughout the appended drawings, like features are identified by like reference numerals.

### DETAILED DESCRIPTION

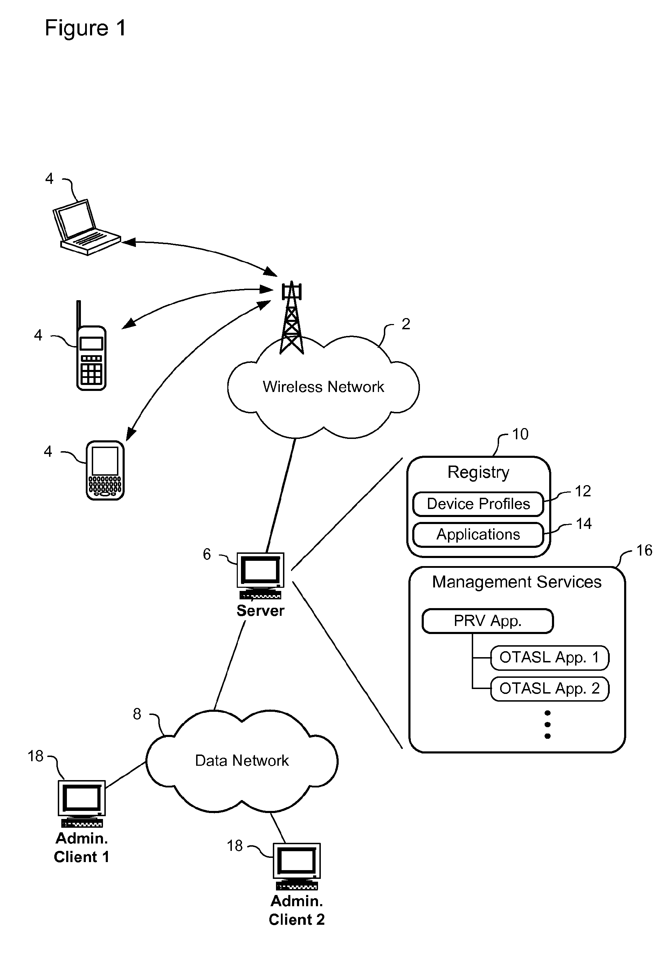

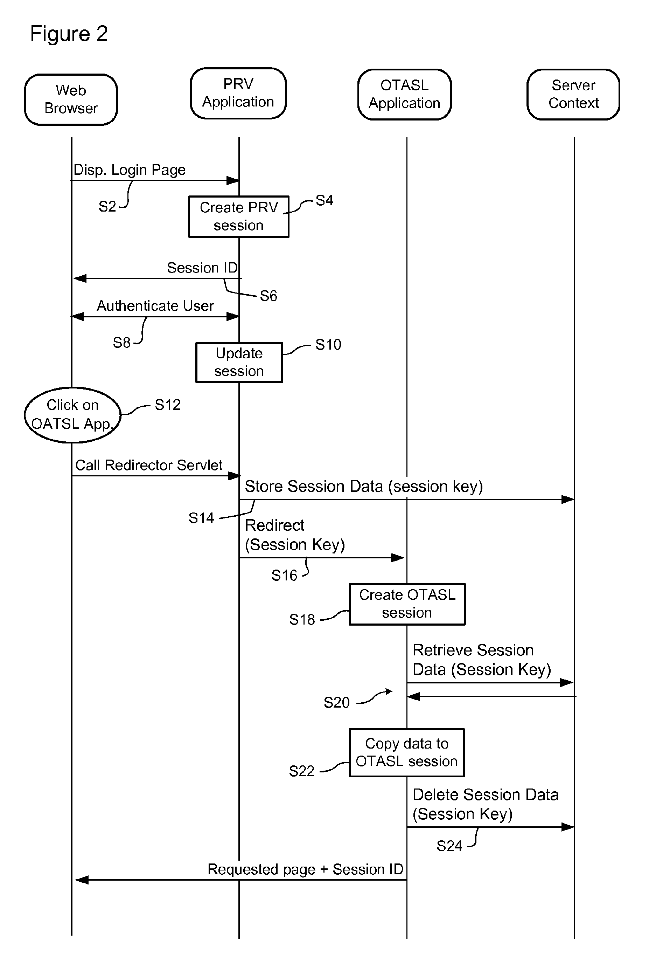

In general, the present disclosure provides a method of sharing session data between two or more applications executing on a common server. Each application has a respective session. In general, a copy of session data of a first application's session is stored in a servlet context resident on the server. The stored session data is copied to the respective session of at least one other application. Thereafter, the stored session data is deleted. The stored session data may correspond with user login, authentication and role management information. Embodiments are described below, by way of example only, with reference to FIGs. 1 and 2.

As shown in FIG. 1, in a typical wireless network 2, a plurality of wireless devices 4 are hosted by a server 6 of a service provider in accordance with the terms of a service contract between the service provider and the owner of each wireless device. Typically, the server 6 is also coupled to a data network 8 (such as, for example, any one or more of a Local Area Network, an intranet or the internet) so as to enable authorized parties to access management functionality of the server 6, as will be explained in greater detail below. The server (6) comprises components known to those skilled in the art, such as a processor for controlling operation of the server; one or more input devices coupled to the processor for accepting an input; a communications subsystem coupled to the processor for communicating with a communications network; a memory coupled to the processor; and a storage device coupled to the processor. The server 6 also includes various software modules resident in the memory for execution by the processor.

For the purposes of the present description, the server 6, and indeed any server, may be provided by a single computer, or a cluster of two or more computers connected by a network (such as, for example, a local area network) and operating under the authority of a single management domain.

The server preferably provides a registry 10, which may be co-resident with the server 6 or may be located remotely from the server 6 and accessed via the data network 8. The registry 10 generally comprises a profiles registry 12 and an applications registry 14. The profiles registry 12 contains, for each terminal device 4, a respective profile which contains information identifying each software application installed on that terminal device 4, and possibly additional information such as the version of the installed software. The applications registry 14 contains information identifying wireless applications that are available to the terminal devices 4, and possibly also addresses (e.g., Universal Resources Look-ups (URLs)) of respective back-end data sources and/or web services of the data network 8 that may be accessed by each application.

The server 6 also provides device management services 16, which may be co-resident with the server 6 or may be located remotely from the server 6 and accessed via the data network 8.

In general, the device management services suite 16 provides a mechanism by which authorized parties can manage the implementation of software updates to the wireless devices 4 hosted by the server 6. For the purposes of the present application, "authorized parties" may include any party who is authorized to access and use the management services 16. These may include software application developers, device manufacturers, network service carriers, etc. Typically, each authorized party will use an Administration Client application 18 to interact with the management services 16, via the data network 8, as shown in FIG. 1.

In order to accommodate the wide and growing variety of wireless devices, it is convenient to design the management services suite 16 as a set of applications, each of which provides a respective portion of the functionality of the management services suite 16. For example, in order to install a new software application or an application update on a wireless terminal, the user of the terminal may access a main provisioning application (e.g., a first application) of the management services suite 16. This may be accomplished by selecting an icon on a display of the wireless terminal, or in the case of an update selecting a link contained in an update initiation message sent to the wireless terminal 4. In either case, the main provisioning application, which may be configured as a web application, may enable the user to browse through a number of available applications/updates, and select those that are desired to be installed on their wireless terminal. Once the applications/updates have been selected, an Over The Air Software Loading (OTASL) application (e.g., a second application) is instantiated to manage the transfer of the selected applications/updates to the wireless terminal. This arrangement may be beneficial in that it may enable a common (e.g., nominally generic) main provisioning application to be deployed on the server 6 to handle user authentication and role management, while a respective OTASL application tailored to the particular requirements of the subscriber's wireless terminal handles selection of applications/updates by the subscriber, and subsequent transfer of application code to the wireless device.

Both the main provisioning application and the OATSL application(s) may conveniently be configured as web applications, and may execute on the same server 6. The division of functionality between the main provisioning application and the OTASL application may be transparent to the subscriber. For this to occur, information may be shared between at least the main provisioning and OTASL sessions. In the present example, session data of the Provisioning application is shared with the OTASL application.

This can be accomplished by means of the method illustrated in FIG. 2, and described below:

When the user accesses the server (at step S2) to download an application or update, the Provisioning application instantiates a respective session (i.e., PRV session) for the user (at step S4); sends the log-in page and session identifier to the user (at step S6); and initiates user login and authentication routines (at step S8). Upon successful completion of login and authentication, the provisioning application updates the PRV session (at step S10) with applicable user login, authentication and/or role management information.

The server also downloads an "opening" web page for display on the user's web browser. Among other things, the opening web page contains icons and URLs enabling the user to access various sub-pages of the web service. One of these icons/URLs links to the OTASL application. The link may include the session key associated with PRV session. When the user selects that icon/URL (at step S12), the user's request is received and handled by a special redirector servlet (not shown) associated with the provisioning application. As is known in the art, a redirector servlet is a software entity typically deployed on a web server to receive external requests and redirect the received requests to appropriate addresses of the web server. In the present case, the special redirector servlet is configured to enable messaging between the provisioning and OTASL applications, using the session key associated with the PRV session. Use of a special redirector servlet in this manner is advantageous in that it leverages the conventional functionality provided by a redirector servlet, and thus avoids the need to develop additional software to provide equivalent functionality.

In the present case, the special redirector servlet provides a servlet context in a conventional manner. As is known in the art, the servlet context is an area of a server's memory that is shared between all applications running on that server, and is accessible to all of them. In the present technique, this servlet context is leveraged to facilitate passing of session data between applications. It will be appreciated, however, that there are other means by which this functionality could be implemented.

The special redirector servlet creates an entry in its Servlet Context, within which a copy of the Provisioning application's session data can be stored under a predetermined session key that is unique to the PRV session.

In the illustrated embodiment, the special redirector servlet opens the required entry in the servlet context, and then stores the PRV session data in the servlet context (at step S14). As may be appreciated, PRV session data stored in the servlet context, may be a copy of the entire PRV session, or a predetermined portion of it. For example, the stored PRV session data may comprise all PRV session data including any one or more of user login, user authentication, user information, user account information, payment information, and role management information.

As may be appreciated, the PRV session data is stored under a unique key because each application will typically have multiple concurrent sessions, one for each user currently logged into the web service. A convenient way of providing a unique key is to set the key equal to the session key of the provisioning application's session, as in the illustrated embodiment, but this is optional. As mentioned above, this session key may be included in the link to the OTASL application, thereby providing completely automatic and seamless session information sharing from the perspective of the user.

Referring back to FIG. 2, at step S16 the special redirector servlet then passes the key to the OTASL application, which then instantiates a respective session (i.e., OTASL session) for the user (at step S18), and retrieves the stored PRV session data from the server context, at step S20.

The OTASL application then copies at least a portion of the retrieved PRV session data to its own OTASL session (at step S22), so that the OTASL session contains a duplicate of the authentication and permission information contained in the PRV session. In one embodiment, this session data sharing is done entirely on the server side.

The Provisioning application session data stored in the servlet context can then be deleted, either by the special redirector servlet of the OTASL application, as shown in FIG. 2 at step S24.

The above described process results in the OASTL application's session containing a duplicate of at least selected portions of the provisioning application's session, so that the user experiences the two applications as a single seamlessly integrated whole.

In the foregoing description, the present technique has been described with reverence to a specific embodiment in which it is desired to share session data between two applications, in this case a main provisioning application and an OTASL application. However, it will be appreciated that this embodiment is not limitative. In particular, those of ordinary skill in the art will recognize that the methods disclosed herein can be readily extended to enable session information to be shared between any two or more applications running on the same server. In the above example embodiment, the PRV session information is copied to the OTASL application session. More generally, in a web service composed of multiple applications, one application will normally be provided to handle the initial interaction with the user, including user login and authentication. The session data from this application would then be copied to the respective sessions of other applications (or sub-applications) as needed during the course of the user's interaction with the web service.

The embodiments described above are intended to be illustrative only. The scope of the invention is therefore intended to be limited solely by the scope of the appended claims.

A portion of the disclosure of this patent document may contain material that is subject to copyright protection. The copyright owner has no objection to the facsimile reproduction by anyone of the patent document or patent disclosure, as it appears in the Patent and Trademark Office patent file or records, but otherwise reserves all copyright.

## Claims

1. A method of automatically sharing session data between two or more applications (16) executing on a common server (6), each application having a respective session, the method comprising steps of:
storing a copy of session data of a first application's session in a servlet context resident on the server (6);
copying the stored session data to a second application's session on the server (6); and
thereafter deleting the stored session data.

2. A method as claimed in claim 1, wherein the step of storing a copy of session data of the first application's session comprises steps of:
selecting a unique key in respect of the first application's session; and
storing the session data in an entry of the servlet context, associated with the selected key.

3. A method as claimed in claim 2, wherein the unique key corresponds with a session key of the first application's session and the session key is included in a link used to access the second application from the first application.

4. A method as claimed in any one of claims 1-3, wherein the servlet context is instantiated by a redirector servlet executing on the server (6) to enable interaction between at least the first and second applications (16).

5. A method as claimed in any one of claims 1-4, wherein the step of storing a copy of session data of the first application's session comprises storing the entire session of the first application.

6. A method as claimed in any one of claims 1-4, wherein the step of storing a copy of session data of the first application's session comprises storing a predetermined portion of the session of the first application.

7. A method as claimed in claim 6, wherein the predetermined portion of the session of the first application comprises session data associated with the session including any one or more of: user login; user authentication; user information; user account information; payment information; and role management information.

8. A server (6) comprising:
a processor for controlling operation of the server;
a first input device coupled to the processor for accepting an input;
a communications subsystem coupled to the processor for communicating with a communications network;
a memory coupled to the processor; and
a storage device coupled to the processor;
the server including a software module resident in the memory for execution by the processor, the software module for automatically sharing session data between two or more applications (16) executing on the server (6), each application having a respective session, the software module being configured to:
store a copy of session data of a first application's session in a servlet context resident on the server (6);
copy the stored session data to a second application's session on the server (6); and
thereafter delete the stored session data.

9. The server (6) as claimed in claim 8, wherein the storing a copy of session data of the first application's session comprises:
selecting a unique key in respect of the first application's session; and
storing the session data in an entry of the servlet context, associated with the selected key.

10. The server as claimed in claim 9, wherein the unique key corresponds with a session key of the first application's session and the session key is included in a link used to access the second application from the first application.

11. The server as claimed in any one of claims 8-10, wherein the servlet context is instantiated by a redirector servlet executing on the server (6) to enable interaction between at least the first and second applications (16).

12. The server as claimed in any one of claims 8-11, wherein the storing a copy of session data of the first application's session comprises storing the entire session of the first application.

13. The server as claimed in any one of claims 8-11, wherein the step of storing a copy of session data of the first application's session comprises storing a predetermined portion of the session of the first application.

14. The server as claimed in claim 13, wherein the predetermined portion of the session of the first application comprises session data associated with the session including any one or more of: user login; user authentication; user information; user account information; payment information; and role management information.

15. A computer readable medium comprising instructions that, when executed by a processor of a computer adapt the computer to perform all of the steps of any of claims 1 to 7.
